# EUROPÄISCHE PATENTSCHRIFT

(11) **EP 2 147 523 B1**
(45) Veröffentlichungstag und Bekanntmachung des Hinweises auf die Patenterteilung: **26.08.2015**
(21) Anmeldenummer: 08749327.6
(22) Anmeldetag: 06.05.2008
(51) Int. Cl.: H04L 29/06, H04W 80/04, H04W 24/08, H04L 12/26

(54) **VERFAHREN, DATENVERARBEITUNGSPROGRAMM, DATENVERARBEITUNGSPROGRAMMPRODUKT UND SYSTEM ZUR ÜBERWACHUNG EINES GTP KOMMUNIKATIONSPFADES IN EINEM UMTS/GPRS NETZWERK**
METHOD, COMPUTER PROGRAM, COMPUTER PROGRAM PRODUCT AND SYSTEM FOR MONITORING A GTP COMMUNICATION PATH IN AN UMTS/GPRS NETWORK
PROCÉDÉ, PROGRAMME D'ORDINATEUR, PRODUIT PROGRAMME D'ORDINATEUR ET DISPOSITIF PERMETTANT DE SURVEILLER UNE VOIE DE COMMUNICATION GTP DANS UN RÉSEAU UMTS/GPRS

(30) Priorität: 11.05.2007 DE 102007022066
(43) Veröffentlichungstag der Anmeldung: 27.01.2010
(73) Patentinhaber: Deutsche Telekom AG, 53113 Bonn (DE)
(72) Erfinder: HIRSCH, Christian, 90513 Zirndorf (DE); MAERZ, Frank, 91220 Schnaittach (DE)
(74) Vertreter: Riebling, Peter
(86) Internationale Anmeldenummer: PCT/EP2008/003600
(87) Internationale Veröffentlichungsnummer: WO 2008/138509

(56) Entgegenhaltungen:
- WO-A-02/51181
- US-A1- 2006 159 025
- TEKTRONIX, INC.: "Testing the UMTS Iu Interface"[Online] 2000, XP002500189 Gefunden im Internet: URL:http://www.tek.com/Measurement/App_Not es/2F_14252/eng/2FW_14252_0.pdf> [gefunden am 2008-10-17]

## Beschreibung

Die Erfindung betrifft ein Verfahren zur Überwachung eines GTP Kommunikationspfades in einem UMTS/GPRS Netzwerk, nach dem Oberbegriff des Anspruchs 1.

Das GPRS Tunneling Protocol, abgekürzt GTP, ist ein IP-basiertes Protokoll das innerhalb von GSM- und UMTS-Netzwerken verwendet wird. Das GTP tunnelt sogenannte Paket Data Units durch das GPRS-Backbone Netzwerk und ist dem User Datagram Protocol, abgekürzt UDP, übergeordnet. GTP umfasst prinzipiell drei separate Protokolle, GTP-C, GTP-U und GRP'. GTP-C wird innerhalb des GPRS-Backbone Netzwerks für Signalisierungszwecke zwischen GPRS Netzknoten, beispielsweise SGSN oder GGSN, verwendet. GTP-U wird als Träger für Benutzerdaten innerhalb des GPRS-Netzwerkes und zwischen dem Funkzugangsnetzwerk und den Kernnetzwerken verwendet. GTP' wird unter anderem als Träger für Abrechnungsdaten im GPRS-Netzwerk verwendet.

Das GTP-Protokoll ist in der Spezifikation 3GPP TS 29.060 näher spezifiziert. Die Kontrollfunktionen im Netzwerk werden wie oben beschrieben durch GTP-C Kontrollnachrichten aufrechterhalten, die zwischen den Netzknoten ausgetauscht werden. Der Zustand der Kommunikationspfade zwischen den Netzknoten kann ebenfalls mittels GTP-C Nachrichten überwacht und geprüft werden. Hierzu sendet ein Netzknoten eine sogenannte GTP Echo Request Nachricht an einen anderen Netzknoten, der diese Nachricht mit einer GTP Echo Response Nachricht quittiert. Die GTP Echo Funktion im GTP ist vergleichbar mit der PING Funktion gemäß dem ICMP Protokoll. GTP Echo ist ein PING innerhalb des GTP Protokolls. Die GTP Echo Nachrichten werden nur von direkt an einer Kommunikation beteiligten Netzelementen gesendet, insbesondere senden die Netzknoten GTP Echo Nachrichten nur an andere Netzknoten, mit denen ein offener Kommunikationspfad, sprich PDB Context, besteht oder bestand. Wird eine GTP Echo Request Nachricht nicht mit einer GTP Echo Response Nachricht erwidert, so ist der Kommunikationspfad unterbrochen. Erhält der sendende Netzknoten als Quittierung eine GTP Echo Response Nachricht, so kann er daraus die Umlaufzeit, auch bezeichnet als RoundTripTime, bestimmen, welche die Zeit zwischen dem Senden eines Datenpakets und dem Empfang einer Quittung darstellt.

Generell ist ein vorgegebener Grenzwert für die RoundTripTime definiert, wobei bei einem Überschreiten dieses Grenzwertes eine Störung im Kommunikationspfad angenommen wird. Bisher ist ein permanentes Prüfen der Verfügbarkeit von Netzknoten bzw. Kommunikationspfaden in UMTS/GPRS-Netzen nicht gegeben, da die GTP Echo Nachrichten nur bei aktiver Kommunikationsverbindung übermittelt werden. Daher können bisher Parameter wie die RoundTripTime nicht aktiv gemessen werden, insbesondere für beliebige Netzknoten. Viele bisher bekannten Überwachungssysteme analysieren nur passiv den Netzwerkverkehr, der über den Kommunikationspfad geht.

US 2006/0159025 A1 offenbart ein Verfahren zur Ermittlung der Netzwerkleistung eines IP Netzwerkes, durch Bestimmung der Umlaufzeit (Round Trip Time) zwischen zwei Netzelementen. Von einem Netzelement wird eine Kontrollnachricht an das andere Netzelement abgesendet und von diesem durch eine Antwortnachricht erwidert. Aus der Zeit zwischen dem Empfangen der Antwortnachricht und dem Absenden der Kontrollnachricht kann die Umlaufzeit bestimmt werden. Die beschriebenen Nachrichten und Protokolle können nicht zur Bestimmung der Umlaufzeit in einem UMTS/GPRS Netzwerk eingesetzt werden.

Es ist die Aufgabe der Erfindung, ein Verfahren zur Überwachung eines GTP Kommunikationspfades in einem UMTS/GPRS Netzwerk anzugeben, welches ein permanentes Überwachen der Verfügbarkeit von Netzknoten innerhalb des Kommunikationsnetzwerkes erlaubt.

Zur Lösung dieser Aufgabe ist die Erfindung durch die Merkmale des unabhängigen Anspruchs 1 gekennzeichnet. Ein Monitoringsystem gemäß der Erfindung ist im unabhängigen Anspruch 4 angegeben.

Insbesondere schlägt die Erfindung ein Verfahren zur Überwachung eines GTP Kommunikationspfades in einem UMTS/GPRS Netzwerk vor, welches folgende Schritte umfasst:
- Generieren einer GTP-C Nachricht in Form einer GTP Echo Request Nachricht in einem mit dem UMTS/GPRS Netzwerk verbundenen Monitoringsystem, wobei die GTP Echo Request Nachricht als Ursprungsadresse eine IP Adresse des Monitoringsystems und als Zieladresse eine IP Adresse eines Netzknotens des UMTS/GPRS Netzwerks oder eines externen Netzwerks enthält,
- Übermitteln der GTP Echo Request Nachricht an den adressierten Netzknoten und Speichern des Zeitpunkts der Übermittlung der Nachricht im Monitoringsystem,
- Empfangen der GTP Echo Request Nachricht in dem Netzknoten bei erfolgreicher Übermittlung,
- Generieren einer GTP-C Nachricht in Form einer GTP Echo Response Nachricht in dem Netzknoten, wobei die GTP Echo Response Nachricht als Ursprungsadresse die IP Adresse des Netzknotens und als Zieladresse die IP Adresse des Monitoringsystems enthält,
- Übermitteln der GTP Echo Response Nachricht an das adressierte Monitoringsystem,
- Empfangen der GTP Echo Response Nachricht in dem Monitoringsystem bei erfolgreicher Übermittlung, und
- Bestimmen einer Umlaufzeit, RoundTripTime, der GTP Echo Request/Response Nachrichten durch Bilden der Differenz zwischen dem Zeitpunkt des Empfangs der GTP Echo Response Nachricht und dem Absenden der GTP Echo Request Nachricht durch das Monitoringsystem.

Der Vorteil der Erfindung liegt darin, dass Netzelemente des UMTS/GPRS-Netzes und auch Netzelemente von Roamingpartnern aktiv mit dem GTP Echo Verfahren mittels des Monitoringsystems angesprochen und in regelmäßigen Abständen überprüft werden können. Insbesondere kann zu einer beliebigen Zeit bzw. in regelmäßigen Abständen die Umlaufzeit, RoundTripTime, gemessen und als Qualitätsindikator des Kommunikationspfades verwendet werden. Auf diese Art können Fehler in der Backbone-Kommunikation, beispielsweise auch Firewall oder Routerprobleme, sehr schnell erkannt werden.

In einer bevorzugten Ausgestaltung der Erfindung kann durch das Monitoringsystem eine Fehlermeldung generiert werden, falls die gemessene Umlaufzeit, RoundTripTime, einen vorgegebenen Grenzwert erreicht oder überschreitet.

Erfindungsgemäß wird also das GTP Echo Verfahren als Qualitätsindikator des Kommunikationsnetzes verwendet.

Es wird ein Monitoringsystem eingesetzt, das basierend auf einem Datenverarbeitungsprogramm eine GTP-Nachricht gemäß der Spezifikation 3GPP 29.060 an ein Netzelement des GPRS-Backbone Netzes sendet. Hierbei handelt es sich um die GTP-C Funktion "GTP Echo Request". Diese Funktion überprüft, ob der Kommunikationspfad zu dem adressierten Netzwerkknoten funktioniert, indem das Monitoringsystem auf eine Quittung des angesprochenen Netzwerkknotens in Form einer GTP Echo Response Nachricht wartet. Die Umlaufzeit zwischen dem Senden und Empfangen der GTP Echo Nachrichten wird im Monitoringsystem gemessen und lässt Rückschlüsse auf die Qualität des Kommunikationspfades zu.

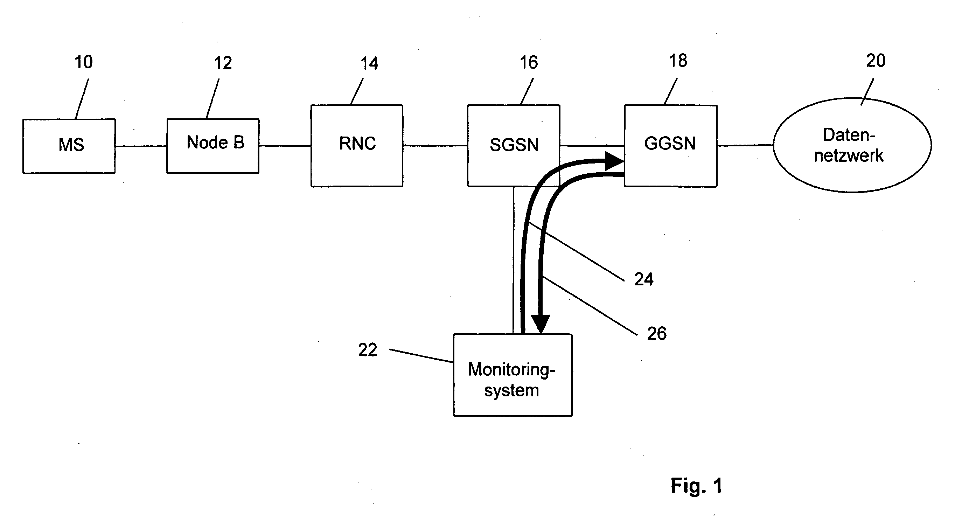

Die Erfindung wird nun anhand der Zeichnung Figur 1 näher erläutert. Aus Figur 1 ergeben sich weitere Merkmale und Vorteile der Erfindung.

Figur 1 zeigt schematisch ein Blockdiagramm eines Teils eines UMTS/GPRS-Netzwerks und eines daran angeschlossenen Monitoringsystems 22. Das Kommunikationssystem umfasst eine Mobilstation 10, die beispielsweise ein Mobiltelefön sein kann. Die Mobilstation 10 ist über eine Funkschnittstelle mit einem Node B 12, also einer Funkfeststation des Netzwerkes verbunden. Der Node B 12 stellt die Verbindung zwischen der Mobilstation 10 und dem Rest des Netzwerkes sicher. Der Node B 12 wird von einem Radio Network Controller RNC 14, also einer Funknetzwerksteuerung gesteuert, welche den Betrieb des Node B bzw. einer Vielzahl von Node B koordiniert. Der RNC 14 ist mit einem Serving GPRS Support Node 16 (SGSN) verbunden. Der SGSN 16 ist ein GPRS-Netzknoten, der als Vermittlungsstelle arbeitet und den Datenverkehr von und zu dem RNC 14 und anderen Punkten des Netzwerkes vermittelt. Der SGSN 16 ist mit einem Gateway GPRS Support Node 18 (GGSN) verbunden, welcher einen GPRS-Übergangs-Netzknoten darstellt. Der GGSN 18 arbeitet als Übergang (Gateway) zu anderen Datennetzwerken 20, beispielsweise dem Internet. Selbstverständlich kann ein UMTS/GPRS-Netzwerk jeweils eine Vielzahl von MS 10, Node B, RNC 14, SGSN 16, GGSN 18, enthalten, wobei hier exemplarisch nur jeweils ein solches Netzelement dargestellt ist.

Erfindungsgemäß ist mit einem Netzknoten, beispielsweise dem SGSN 16, ein neuartiges Monitoringsystem 22 verbunden. Das Monitoringsystem 22 umfasst beispielsweise eine Datenverarbeitungseinrichtung mit entsprechenden Speichermöglichkeiten sowie entsprechende Hardware und/oder Software, die eine Datenkommunikation mit dem UMTS/GPRS-Netzwerk ermöglicht. Das Monitoringsystem 22 kann auch Teil eines SGSN 16 oder eines anderen Netzwerkknotens sein.

Mittels des Monitoringsystems 22 kann erfindungsgemäß permanent die Verfügbarkeit von Netzknoten und Kommunikationspfaden im Netzwerk geprüft werden.

Hierzu umfasst das Monitoringsystem 22 entsprechende Mittel zur Generierung einer GTP-C Nachricht in Form einer GTP Echo Request Nachricht 24. Die erzeugte GTP Echo Request Nachricht 24 enthält unter anderem als Ursprungsadresse die dem Monitoringssystem 22 zugeteilte IP-Adresse und als Zieladresse eine dem zu prüfenden Netzknoten zugeteilte IP-Adresse. Es können beliebige Netzknoten und Netzelemente des Netzwerkes mittels des Monitoringsystems 22 geprüft werden, welche das GTP Echo Verfahren unterstützen, beispielsweise RCN, SGSN, GGSN oder Netzknoten eines externen Datennetzwerkes. Hierzu kann im Monitoringssystem 22 bzw. in einem Speicher des Monitoringsystems eine Liste von IP-Adressen der zu prüfenden Netzknoten und Netzelemente gespeichert sein, aus welcher die Zieladressen für die Prüfung ausgewählt werden.

Das Monitoringsystem 22 umfasst ferner Mittel zum Übermitteln der erzeugten GTP Echo Request Nachricht 24 an den adressierten Netzknoten, hier beispielsweise den Netzknoten GGSN 18. Der Zeitpunkt der Übermittlung der GTP Echo Request Nachricht 24 wird im Monitoringsystem 22 gespeichert.

Die GTP Echo Request Nachricht 24 wird vom Monitoringsystem 22 über den SGSN 16 zum adressierten GGSN 18 gesendet und dort empfangen. Wenn die GTP Echo Request Nachricht 24 im GGSN 16 ordnungsgemäß empfangen wurde, so wird im GGSN 16 standartgemäß eine GTP-C Nachricht in Form einer GTP Echo Response Nachricht 26 generiert. Die GTP Response Nachricht 26 enthält als Ursprungsadresse die IP-Adresse des Netzknotens, GGSN 18, und als Zieladresse die IP-Adresse des Monitoringsystems 22 das die GTP Echo Request Nachricht 24 gesendet hat. Diese GTP Echo Response Nachricht 26 wird vom GGSN 18 an das adressierte Monitoringsystem 22 übermittelt. Das Monitoringsystem umfasst Mittel zum empfangen der GTP Echo Response Nachricht 26, wobei der Empfang der GTP Echo Response Nachricht 26 mit einem Zeitstempel versehen wird um den Zeitpunkt des Empfangs dieser Nachricht zu protokollieren.

Das Monitoringsystem 22 bestimmt nun eine Umlaufzeit, RoundTripTime, für die gesendeten und empfangenen GTP Echo Request/Response Nachrichten 24, 26. Die Umlaufzeit wird bestimmt durch bilden der Differenz zwischen dem Zeitpunkt des Empfangs der GTP Echo Response Nachricht 26 und dem Zeitpunkt des Absendes der GTP Echo Request Nachricht 24 durch das Monitoringsystem 22. Im Kommunikationssystem ist in der Regel ein vorgegebener Grenzwert für die Umlaufzeit, RoundTripTime, festgesetzt. Das Monitoringsystem 22 kann nun eine Fehlermeldung genieren, falls die mittels des GTP Echo Verfahrens gemessene Umlaufzeit den vorgegebenen Grenzwert erreicht oder überschreitet. Falls der GGSN 18 überhaupt nicht auf den GTP Echo Request 24 antwortet, so kann von einem Ausfall der Kommunikationsverbindung bzw. des GGSN 18 ausgegangen werden. Die entsprechenden Ergebnisse der Umlaufzeit der einzelnen Prüfdurchläufe können für eine spätere Auswertung im Monitoringsystem 22 gespeichert werden. Selbstverständlich kann diese GTP Echo Prüfung nicht nur für den GGSN 18 sondern auch für andere Netzknoten und Netzwerkelemente, z. B. RCN 14, SGSN 16 oder Netzelemente des externen Datennetzwerks 20 durchgeführt werden.

### Liste der Bezugszeichen und Abkürzungen

- 10: MS: Mobilstation
- 12: Node B (Funkfeststation)
- 14: RNC: Radio Network Controller (Funknetzwerksteuerung)
- 16: SGSN: Serving GPRS Support Node (GPRS Netzknoten)
- 18: GGSN: Gateway GPRS Support Node (GPRS Übergangs-Netzknoten)
- 20: Datennetzwerk
- 22: Monitoringsystem
- 24: GTP Echo Request Nachricht
- 26: GTP Echo Response Nachricht

## Patentansprüche

1. Verfahren zur Überwachung eines GTP Kommunikationspfades in einem UMTS/GPRS Netzwerk, mit den Schritten
Generieren einer GTP-C Nachricht in Form einer GTP Echo Request Nachricht (24) in einem mit dem UMTS/GPRS Netzwerk verbundenen Monitoringsystem (22), wobei die GTP Echo Request Nachricht (24) als Ursprungsadresse eine IP Adresse des Monitoringsystems (22) und als Zieladresse eine IP Adresse eines Netzknotens (14; 16; 18) des UMTS/GPRS Netzwerks oder eines externen Netzwerks (20) enthält, wobei im Monitoringssystem (22) oder in einem Speicher des Monitoringsystems eine Liste von IP-Adressen der zu prüfenden Netzknoten und Netzelemente gespeichert ist, aus welcher die Zieladressen für die Prüfung ausgewählt werden,
Übermitteln der GTP Echo Request Nachricht (24) an den adressierten Netzknoten (18) und Speichern des Zeitpunkts der Übermittlung der Nachricht (24) im Monitoringsystem (22), Empfangen der GTP Echo Request Nachricht (24) in dem Netzknoten (18) bei erfolgreicher Übermittlung,
Generieren einer GTP-C Nachricht in Form einer GTP Echo Response Nachricht (26) in dem Netzknoten (18), wobei die GTP Echo Response Nachricht (26) als Ursprungsadresse die IP Adresse des Netzknotens (18) und als Zieladresse die IP Adresse des Monitoringsystems (22) enthält,
Übermitteln der GTP Echo Response Nachricht (26) an das adressierte Monitoringsystem (22),
Empfangen der GTP Echo Response Nachricht in dem Monitoringsystem (22) bei erfolgreicher Übermittlung, und
Bestimmen einer Umlaufzeit, RoundTripTime, der GTP Echo Request/Response Nachrichten durch Bilden der Differenz zwischen dem Zeitpunkt des Empfangs der GTP Echo Response Nachricht (26) und dem Absenden der GTP Echo Request Nachricht (24) durch das Monitoringsystem (22),
Speicherung der entsprechenden Ergebnisse der Umlaufzeit von einzelnen Prüfdurchläufen im Monitoringsystem (22) für eine spätere Auswertung, und
Generierung einer Fehlermeldung durch das Monitoringsystem (22), falls die gemessene Umlaufzeit, RoundTripTime, einen vorgegebenen Grenzwert erreicht oder überschreitet.

2. Datenverarbeitungsprogramm mit einem Programmcode, der auf einer Datenverarbeitungseinrichtung des Monitoringsystems (22) ausgeführt ein Verfahren nach Anspruch 1 durchführt.

3. Datenverarbeitungsprogrammprodukt, das einen auf einer Datenverarbeitungseinrichtung des Monitoringsystems (22) ausführbaren Programmcode zur Durchführung des Verfahrens nach Anspruch 1 umfasst.

4. Monitoringsystem (22) zur Überwachung eines GTP Kommunikationspfades in einem UMTS/GPRS Netzwerk, welches mit
dem UMTS/GPRS Netzwerk verbunden ist und umfasst:
Mittel zur Generierung einer GTP-C Nachricht in Form einer GTP Echo Request Nachricht (24), wobei die GTP Echo Request Nachricht (24) als Ursprungsadresse eine IP Adresse des Monitoringsystems (22) und als Zieladresse eine IP Adresse eines Netzknotens (14; 16; 18) des UMTS/GPRS Netzwerks oder eines externen Netzwerks (20) enthält,
wobei im Monitoringssystem (22) oder in einem Speicher des Monitoringsystems eine Liste von IP-Adressen der zu prüfenden Netzknoten und Netzelemente gespeichert ist, aus welcher die Zieladressen für die Prüfung auswählbar sind,
Mittel zum Übermitteln der GTP Echo Request Nachricht (24) an den adressierten Netzknoten (18) und zum Speichern des Zeitpunkts der Übermittlung der Nachricht (24),
Mittel zum Empfangen einer von dem adressierten Netzknoten (18) gesendeten GTP Echo Response Nachricht (26) als Antwort auf die erfolgreich übermittelte GTP Echo Request Nachricht (24), und
Mittel zum Bestimmen einer Umlaufzeit, RoundTripTime, der GTP Echo Request/Response Nachrichten durch Bilden der Differenz zwischen dem Zeitpunkt des Empfangs der GTP Echo Response Nachricht (26) und dem Absenden der GTP Echo Request Nachricht (24),
Mittel zur Speicherung der entsprechenden Ergebnisse der Umlaufzeit von einzelnen Prüfdurchläufen im Monitoringsystem (22) für eine spätere Auswertung, und
Mittel zur Generierung einer Fehlermeldung, falls die gemessene Umlaufzeit, RoundTripTime, einen vorgegebenen Grenzwert erreicht oder überschreitet.

## Claims

1. Method for monitoring a GTP communications path in a UMTS/GPRS network, having the steps of
generation of a GTP-C message in the form of a GTP echo request message (24) in a monitoring system (22) connected to the UMTS/GPRS network, wherein the GTP echo request message (24) contains, as the source address, an IP address of the monitoring system (22) and, as the destination address, an IP address of a node (14; 16; 18) of the UMTS/GPRS network or of an external network (20), wherein in the monitoring system (22) or in a memory of the monitoring system (22) is stored a list of IP addresses of the network nodes and network elements to be checked, from which the destination addresses are selected for checking,
transmission of the GTP echo request message (24) to the network node (18) addressed and storing the time of transmission of the message (24) in the monitoring system (22),
reception of the GTP echo request message (24) in the network node (18) when transmission is successful,
generation of a GTP-C message in the form of a GTP echo response message (26) in the network node (18), wherein the GTP echo response message (26) contains, as the source address, the IP address of the network node (18) and, as the destination address, the IP address of the monitoring system (22), transmission of the GTP echo response message (26) to the monitoring system (22) addressed,
reception of the GTP echo response message in the monitoring system (22) when transmission is successful, and
determination of a round-trip time of the GTP echo request/response messages by calculation of the difference between the time of reception of the GTP echo response message (26) and sending of the GTP echo request message (24) by the monitoring system (22),
storage of the corresponding results of the round-trip time of individual check cycles in the monitoring system (22) for later evaluation, and
generation of an error message by the monitoring system (22) in the event that the measured round-trip time reaches or exceeds a given limit value.

2. Data processing program having a program code which, executed on a data processing device of the monitoring system (22), carries out a method according to claim 1.

3. Data processing program product which has a program code that can be executed on a data processing device of the monitoring system (22) for carrying out the method according to claim 1.

4. Monitoring system (22) for monitoring a GTP communications path in a UMTS/GPRS network, which is connected to the UMTS/GPRS network and comprises:
means for the generation of a GTP-C message in the form of a GTP echo request message (24), wherein the GTP echo request message (24) contains, as the source address, an IP address of the monitoring system (22) and, as the destination address, an IP address of a node (14; 16; 18) of the UMTS/GPRS network or of an external network (20), wherein in the monitoring system (22) or in a memory of the monitoring system (22) is stored a list of IP addresses of the network nodes and network elements to be checked, from which the destination addresses are selected for checking,
means for the transmission of the GTP echo request message (24) to the network node (18) addressed and for storage of the time of transmission of the message (24),
means for the reception of a GTP echo response message (26) sent by the network node (18) addressed in response to the successfully transmitted GTP echo request message (24), and
means for the determination of a round-trip time of the GTP echo request/response messages by calculation of the difference between the time of reception of the GTP echo response message (26) and sending of the GTP echo request message (24),
means for the storage of the corresponding results of the round-trip time of individual check cycles in the monitoring system (22) for later evaluation, and
means for the generation of an error message in the event that the measured round-trip time reaches or exceeds a given limit value.

## Revendications

1. Procédé pour surveiller une voie de communication GTP dans un réseau UMTS/GPRS, avec les étapes
- de production d'un message GTP-C sous la forme d'un message de Demande d'écho GTP (24) dans un système de suivi (22) relié au réseau UMTS/GPRS, étant précisé que le message de Demande d'écho GTP (24) contient comme adresse d'origine une adresse IP du système de suivi (22), et comme adresse de destination une adresse IP d'un noeud de réseau (14 ; 16 ; 18) du réseau UMTS/GPRS ou d'un réseau externe (20), et qu'une liste d'adresses IP des noeuds de réseau et éléments de réseau à contrôler à partir de laquelle sont sélectionnées les adresses de destination pour le contrôle est stockée dans le système de suivi (22) ou dans une mémoire de celui-ci,
- de transmission du message de Demande d'écho GTP (24) au noeud de réseau (18) adressé, et de mise en mémoire du moment de la transmission du message (24) dans le système de suivi (22),
- de réception du message de Demande d'écho GTP (24) dans le noeud de réseau (18), dans le cas d'une transmission réussie,
- de production d'un message GTP-C sous la forme d'un message de Réponse d'écho GTP (26) dans le noeud de réseau (18), étant précisé que le message de réponse d'écho GTP (26) contient comme adresse d'origine l'adresse IP du noeud de réseau (18), et comme adresse de destination l'adresse IP du système de suivi (22),
- de transmission du message de réponse d'écho GTP (26) au système de suivi (22) adressé,
- de réception du message de réponse d'écho GTP dans le système de suivi (22), dans le cas d'une transmission réussie, et
- de définition d'une durée de cycle (RoundTripTime) des messages de Demande/Réponse d'écho GTP grâce à la formation de la différence entre le moment de la réception du message de Réponse d'écho GTP (26) et l'envoi du message de Demande d'écho GTP (24) par le système de suivi (22),
- de stockage des résultats correspondants de la durée de cycle d'opérations de contrôle individuelles dans le système de suivi (22) pour une évaluation ultérieure, et
- de production d'un message d'erreur par le système de suivi (22), au cas où la durée de cycle (RoundTripTime) mesurée atteint ou dépasse une valeur limite prédéfinie.

2. Programme d'ordinateur avec un code de programme qui, exécuté sur un ordinateur du système de suivi (22), met en oeuvre un procédé selon la revendication 1.

3. Produit d'ordinateur qui comprend un code de programme, pour la mise en oeuvre du procédé selon la revendication 1, qui est apte à être exécuté sur un ordinateur du système de suivi (22).

4. Système de suivi (22) pour surveiller une voie de communication GTP dans un réseau UMTS/GPRS, qui est relié au réseau UMTS/GPRS et qui comprend :
- des moyens pour produire un message GTP-C sous la forme d'un message de Demande d'écho GTP (24), étant précisé que le message de Demande d'écho GTP (24) contient comme adresse d'origine une adresse IP du système de suivi (22), et comme adresse de destination une adresse IP d'un noeud de réseau (14 ; 16 ; 18) du réseau UMTS/GPRS ou d'un réseau externe (20), et qu'une liste d'adresses IP des noeuds de réseau et éléments de réseau à contrôler à partir de laquelle peuvent être sélectionnées les adresses de destination pour le contrôle est stockée dans le système de suivi (22) ou dans une mémoire de celui-ci,
- des moyens pour transmettre le message de Demande d'écho GTP (24) au noeud de réseau (18) adressé, et pour mettre en mémoire le moment de la transmission du message (24),
- des moyens pour recevoir un message de Réponse d'écho GTP (26) envoyé par le noeud de réseau (18) adressé, en réponse au message de Demande d'écho GTP (24) transmis avec succès,
- des moyens pour définir une durée de cycle (RoundTripTime) des messages de Demande/Réponse d'écho GTP en formant la différence entre le moment de la réception du message de Réponse d'écho GTP (26) et l'envoi du message de Demande d'écho GTP (24),
- des moyens pour stocker les résultats correspondants de la durée de cycle d'opérations de contrôle individuelles dans le système de suivi (22) pour une évaluation ultérieure, et
- des moyens pour produire un message d'erreur au cas où la durée de cycle (RoundTripTime) mesurée atteint ou dépasse une valeur limite prédéfinie.
